# EUROPÄISCHE PATENTSCHRIFT

(11) **EP 2 301 046 B1**
(45) Veröffentlichungstag und Bekanntmachung des Hinweises auf die Patenterteilung: **30.08.2017**
(21) Anmeldenummer: 09780833.1
(22) Anmeldetag: 20.07.2009
(51) Int. Cl.: H01C 7/12, H01T 1/14, H01T 4/16, H02H 9/04

(54) **ÜBERSPANNUNGSABLEITERANORDNUNG MIT EINEM MEHRERE ABLEITERSÄULEN AUFWEISENDEN ABLEITSTROMPFAD**
OVERVOLTAGE ARRESTER ASSEMBLY WITH A CURRENT PATH COMPRISING A PLURALITY OF DEVIATION COLUMNS
DISPOSITIF DE PROTECTION CONTRE LES SURTENSIONS AVEC UN CHEMIN DE COURANT COMPRENANT PLUSIEURS COLONNES DE DÉVIATION

(30) Priorität: 24.07.2008 DE 102008034890
(43) Veröffentlichungstag der Anmeldung: 30.03.2011
(73) Patentinhaber: Siemens Aktiengesellschaft, 80333 München (DE)
(72) Erfinder: PIPPERT, Erhard, 14624 Dallgow-Döberritz OT Seeburg (DE); SPRINGBORN, Dirk, 12203 Berlin (DE); GOTTSCHALK, Ingo, 10715 Berlin (DE); BARENTHIN, Gundolf, 10965 Berlin (DE); SULITZE, Markus, 14612 Falkensee (DE)
(86) Internationale Anmeldenummer: PCT/EP2009/059303
(87) Internationale Veröffentlichungsnummer: WO 2010/010067

(56) Entgegenhaltungen:
- EP-A1- 0 634 757
- EP-A2- 0 537 486
- EP-B1- 0 673 543
- DE-C1- 10 104 393

## Beschreibung

Die Erfindung betrifft eine Überspannungsableiteranordnung mit einem mehrere Ableitersäulen aufweisenden Ableitstrompfad, wobei zumindest eine erste und eine zweite Ableitersäule jeweils zumindest einen eine Ableitersäule endseitig abschließenden Armaturkörper aufweisen.

Eine derartige Überspannungsableiteranordnung ist beispielsweise in der europäischen Patentschrift EP 0 673 543 B1 beschrieben. Die bekannte Überspannungsableiteranordnung weist einen Ableitstrompfad mit mehreren Ableitersäulen auf. Die Ableitersäulen sind endseitig jeweils mit Armaturkörpern versehen, welche jede Ableitersäule abschließen. Jede der Ableitersäulen ist dabei individuell über eine gesonderte Druckfeder positioniert. Über die Druckfedern können Längendifferenzen der einzelnen Ableitersäulen ausgeglichen werden.

Aufgrund der individuellen Positionierung jeder Ableitersäule ist eine Montage der bekannten Überspannungsableiteranordnung aufwendig. Jede Säule muss einzeln justiert und positioniert werden.

Daher ist es Aufgabe der Erfindung, eine Überspannungsableiteranordnung anzugeben, welche einfacher zu fertigen ist.

Erfindungsgemäß wird die Aufgabe bei einer Überspannungsableiteranordnung der eingangs genannten Art dadurch gelöst, dass die Armaturkörper über ein Koppelelement miteinander verbunden sind.

Typischerweise weisen Ableitersäulen eine langgestreckte Struktur auf. Die Ableitersäulen sind dabei annähernd parallel zueinander ausgerichtet. Ableitersäulen weisen beispielsweise eine Vielzahl stirnseitig aneinander liegender Varistorelemente auf. Zur Halterung dieser Varistorelemente eignen sich in günstiger Weise Armaturkörper. Aufgrund von Fertigungstoleranzen können die einzelnen Varistorelemente unterschiedliche Dimensionen aufweisen, so dass nach einer erfolgten Zusammenstellung mehrerer Varistorelemente unterschiedlich lange Ableitersäulen entstehen können. Durch die Kopplung zweier Armaturkörper zweier Ableitersäulen über ein Koppelelement ist die Möglichkeit gegeben, die Ableitersäulen untereinander im Bereich der Armaturkörper zu stabilisieren. So ist es möglich, Ableitersäulen zu einem Verbund zusammenzufassen. Ein derartiger Verbund ist vereinfacht zu montieren. Beispielsweise kann vorgesehen sein, während einer Fertigung einer Überspannungsableiteranordnung verschiedenartige Verbünde vorzuhalten, welche bei Bedarf genutzt werden.

Es kann vorgesehen sein, dass jede der Ableitersäulen jeweils endseitig mit separaten Armaturkörpern versehen ist. Durch die Verwendung des Koppelelementes ist beispielsweise die Möglichkeit gegeben, die Ableitersäulen aus einer Vielzahl von Varistorblöcken aufzubauen und mit den Armaturkörpern zu begrenzen. Über das Koppelelement kann unabhängig von Längendifferenzen der zu verbindenden Ableitersäulen eine Stabilisierung derselben zueinander vorgenommen werden. Vorteilhaft ist dabei, wenn alle Ableitersäulen eines Ableitstrompfades einer Ableiteranordnung über ein gemeinsames Koppelelement verbunden sind. Somit ist es möglich, mehreren aus zunächst einzeln vorliegenden Ableitersäulen einen kompakten Verbund im Bereich der Armaturkörper herzustellen. Die Armaturkörper, welche über das Koppelelement miteinander verbunden sind, sollten vorteilhaft das gleiche elektrische Potential aufweisen. Typischerweise weist ein Ableitstrompfad eines Überspannungsableiters ein erdseitiges Ende sowie ein hochspannungsseitiges Ende auf. Dabei sollte vorgesehen sein, dass die Armaturkörper verbundener Ableitersäulen, welche jeweils dem erdseitigen Ende oder jeweils dem hochspannungsseitigen Ende zugeordnet sind, über ein Koppelelement zu verbinden sind. Damit werden beispielsweise Kurzschlussbrücken über die Varistorelemente aufweisenden Ableitersäulen vermieden. Es kann auch vorgesehen sein, dass mehrere Ableitersäulen an einem Ende von einem gemeinsamen Armaturkörper abgeschlossen.

Eine vorteilhafte Ausgestaltung kann vorsehen, dass das Koppelelement unabhängig voneinander verformbare Zweige aufweist und die Armaturkörper mit verschiedenen Zweigen verbunden sind.

Ein Koppelelement kann beispielsweise verschiedene Zweige aufweisen, um eine Ankopplung an die jeweiligen Armaturkörper vorzusehen. Eine Ankopplung kann dabei in verschiedenen Formen erfolgen. So können beispielsweise stoffschlüssige Verbindungen, wie Schweiß-, Löt- oder Klebeverbindungen zum Einsatz kommen. Es können aber auch form- und/oder kraftschlüssige Verbindungen zu einer Kontaktierung des Koppelelementes mit den Armaturkörpern Verwendung finden. Die verschiedenen Zweige können dabei jeweils einer der Ableitsäulen zugeordnet sein. Durch eine Verformung der Zweige unabhängig voneinander ist die Möglichkeit gegeben, unterschiedliche Längen der Ableitersäulen über eine Anpassung der Form des Koppelelementes auszugleichen. Dabei kann vorgesehen sein, dass die Zweige elastisch und/oder plastisch verformbar sind. Bei einer elastischen Verformung der Zweige können die von dem Koppelelement ausgehenden Kräfte zusätzlich zur Stabilisierung des Ableitstrompfades benutzt werden. Der Ableitstrompfad ist durch die Kopplung der Ableitersäulen stabilisiert. Der Ableiterstrompfad ist jedoch auch im begrenzten Maße weiter in sich beweglich.

Dabei kann weiterhin vorteilhaft vorgesehen sein, dass die Zweige durch zumindest einen Schlitz in einer Platte gebildet sind.

Eine Platte, also ein flächiges Element, kann mit Schlitzen versehen sein, so dass aus der Platte verschiedene Zweige herausgearbeitet sind. Vorteilhafterweise kann vorgesehen sein, dass die Platte eine im Wesentlichen mehreckige oder kreisförmige Außenkontur aufweist. Dabei sollten die Schlitze möglichst radial zueinander ausgerichtet sein, so dass im Umfangsbereich des Koppelelementes Verbindungsstellen zu den Ableitersäulen vorgesehen sein können. Zur Festlegung der Position der Verbindungsstellen können beispielsweise Ausnehmungen in den Zweigen vorgesehen sein. In diese Ausnehmungen können beispielsweise Bolzen, Verschraubungen o. ä. hineinragen. Vorteilhaft ist dabei, wenn die Platte beispielsweise eine rechteckige Kontur aufweist, wobei die Schlitze im Wesentlichen parallel zu einer Körperkante der im Wesentlichen rechteckigen Außenkontur ausgerichtet sind. Bei dem Vorsehen einer plastischen Verformbarkeit des Koppelelementes ist es möglich, eine großflächige Verbindung zwischen dem Kontaktelement und dem Armaturkörper herzustellen. Es ist beispielsweise möglich, das Koppelelement als elektrisch leitfähiges Bauteil auszuführen, wobei eine elektrische Kontaktierung der einzelnen Armaturkörper und damit der Ableitersäulen über das Koppelelement vorgesehen sein kann.

Vorteilhafterweise kann weiter vorgesehen sein, dass die miteinander verbundenen Armaturkörper Schultern aufweisen, welche das Koppelelement schirmen.

Insbesondere bei einem Einsatz von Überspannungsableiteranordnungen im Hoch- und Höchstspannungsbereich kann es vorkommen, dass elektrische Felder auftreten, welche beispielsweise zu Entladungserscheinungen an vorspringenden Körperkanten führen. Insbesondere an einem hochspannungsseitigen Ende von Ableitersäulen können die Armaturkörper eine dielektrisch günstige Gestalt aufweisen, d. h. die Armaturkörper sind im Wesentlichen mit gerundeten vorzugsweise zylinderartigen Strukturen versehen, welche abgerundete Körperkanten aufweisen. Damit sind auch die von den Armaturkörpern begrenzten Enden der Varistorelemente der Ableitersäule dielektrisch geschirmt.

Ein Anordnen von Schultern an den über das Koppelelement zu verbindenden Armaturkörpern ermöglicht es, das Koppelelement selbst in einen dielektrisch geschirmten Raum zu positionieren. So ist es beispielsweise möglich, dass an den Armaturkörpern eine Mulde gebildet ist, in welcher das Koppelelement angeordnet ist. Über der Mulde ist vorzugsweise ein feldfreier Raum ausgebildet, so dass Teilentladungen an dem Koppelelement vermieden sind. Damit ist es möglich, die Formgebung des Koppelelementes relativ frei je nach zu erwartenden mechanischen Belastungen zu wählen.

Dabei ist es vorteilhaft, wenn die Begrenzung des feldfreien Raumes durch mehrere zusammenwirkende Schultern an den Armaturkörpern gebildet ist. Im Zusammenspiel mehrerer Schultern der Armaturkörper, beispielsweise zur Ausbildung eines zentralen feldfreien Raumes, kann die Schirmwirkung durch mehrere Armaturkörpern realisiert werden, wobei jeder der Armaturkörper jeweils einen Teil des feldfreien Raumes schirmt. Zur Sicherstellung eines gleichen Potentials der Armaturkörper kann das Koppelelement das Potential zwischen den Armaturkörpern übertragen.

Eine weitere vorteilhafte Ausgestaltung kann vorsehen, dass zur Verspannung zumindest einer der Ableitersäulen zumindest ein Zuganker gemeinsam mit dem Koppelelement an einem Armaturkörper angeschlagen ist.

Die Ableitersäulen weisen typischerweise mehrere stirnseitig aneinander anliegende Varistorelemente auf. Die Varistorelemente sind beispielsweise mit einer kreiszylinderförmigen Kontur versehen. Typischerweise sind die Varistorelemente aus Metalloxiden beispielsweise durch Sinterverfahren hergestellt. Oberflächen können beispielsweise keramische Beschichtungen aufweisen. Um eine Kontaktgabe zwischen den Varistorelementen dauerhaft sicherzustellen und ein sporadisches Auseinanderfallen der Ableitersäulen zu verhindern, ist es vorteilhaft, wenn die Varistorelemente gegeneinander gepresst werden. Dazu können beispielsweise an entgegengesetzten stirnseitigen Enden einer Ableitersäule befindliche Armaturkörper Verwendung finden. Über einen Zuganker können die Armaturkörper unter Zwischenlage des Stapels von Varistorelementen gegeneinander gezogen werden. Dadurch entsteht ein winkelstarrer Verbund, welcher als Ableitsäule verwendbar ist. Die Anordnung des Zugankers kann dabei beispielsweise zentrisch durch Öffnungen in den Varistorelementen erfolgen. Es kann jedoch auch vorgesehen sein, dass einer oder mehrere Zuganker am Umfang der Varistorelemente verteilt angeordnet sind. Als Zuganker eignen sich elektrisch isolierende Elemente, wie beispielsweise Stangen, Schlaufen, Schläuche o. ä.

Um einen Zuganker an einem Armaturkörper festzulegen, können verschiedene Verfahren verwendet werden. So können die Zuganker beispielsweise eingepresst, eingespannt, verschraubt, verklebt usw. werden. Die Verbindung zwischen einem Zuganker und einem Armaturkörper ist dabei einer relativ hohen mechanischen Belastung unterworfen.

Um weitere Verbindungselemente an dem Armaturkörper zu vermeiden kann vorteilhaft vorgesehen sein, dass ein Zuganker gemeinsam mit dem Koppelelement winkelsteif an einem Armaturkörper angeschlagen ist.

Somit ist es möglich, das Koppelelement mit vorhandenen Bauteilen zu positionieren und auch über das Koppelelement entsprechende Kräfte übertragen zu können, die sich möglichst großflächig in die jeweilige Ableitersäule hinein leiten lassen. Vorteilhaft ist es dabei, wenn das Koppelelement mit jedem der über das Koppelelement verbundenen Armaturkörper jeweils gemeinsam mit einem Zuganker mit dem jeweiligen Armaturkörper verbunden ist.

Ist das Koppelelement in einem dielektrisch geschirmten Bereich angeordnet, so kann dieser derart gestaltet sein, dass auch ein Befestigungsmittel zum Befestigen des Koppelelementes sowie des Zugankers innerhalb des geschirmten Bereiches befindlich angeordnet ist.

Vorteilhafterweise kann weiter vorgesehen sein, dass über das Koppelelement die Ableitersäulen elektrisch kontaktiert sind.

Eine elektrische Kontaktierung der Ableitersäulen über das Koppelelement ermöglicht es, einen gemeinsamen Kontaktierungspunkt an dem Ableitstrompfad vorzusehen, wobei sich dieser Kontaktierungspunkt entsprechend über Zweige des Koppelelements auf die einzelnen Ableitersäulen verzweigt. So ist es beispielsweise möglich, an den hochspannungsseitigen Enden der Ableitersäulen einen spannungsführenden Leiter mit dem Koppelelement zu verbinden und den Ableitstrompfad über das Koppelelement auf verschiedene Ableitersäulen aufzuteilen. So ist es beispielsweise möglich, unabhängig von vorhandenen Längendifferenzen der einzelnen Ableitersäulen, eine einfache und dauerhafte Kontaktierung des Ableitstrompfades zu bewirken.

Vorteilhafterweise kann weiter vorgesehen sein, dass die Ableitersäulen innerhalb eines Kapselungsgehäuses angeordnet und an ihren von dem Koppelelement abgewandten Enden gehaltert sind.

So genannte Kapselungsableiter sind Überspannungsableiteranordnungen, deren Ableitstrompfad innerhalb eines Kapselungsgehäuses angeordnet ist. Das Kapselungsgehäuse schützt und umgibt den Ableitstrompfad. Das Kapselungsgehäuse kann dazu beispielsweise zumindest teilweise aus elektrisch isolierenden Materialien, wie beispielsweise Kunststoffen, Keramiken o. ä. gebildet sein. Vorteilhafterweise hat sich eine säulenartige Struktur des elektrisch isolierenden Materials erwiesen, wobei endseitig entsprechende Kontaktierungspunkte für den Ableitstrompfad der Überspannungsableiteranordnung das Kapselungsgehäuse durchsetzen. Für einen Einsatz der Überspannungsableiteranordnung in gasisolierten Schaltanlagen kann das Kapselungsgehäuse auch aus einem Kessel aus elektrisch leitendem Material gebildet sein. Eine erdseitige Kontaktierung kann über den Kessel erfolgen. Für eine hochspannungsseitige Kontaktierung ist an dem Kessel eine elektrisch isolierende Durchführung vorgesehen, durch welche ein elektrischer Leiter gegenüber dem Kessel isoliert gasdicht in das Innere des Kessels eingeführt werden kann.

Dabei kann vorgesehen sein, dass die Ableitersäulen erdseitig mit dem Kapselungsgehäuse winkelsteif verbunden sind und sich innerhalb des Kapselungsgehäuses von diesem Halterungspunkt fortragend erstrecken, so dass die Ableitersäulen ein freies Ende aufweisen. Die Enden der Ableitersäulen, welche von dem Halterungspunkt der Ableitersäulen fortragen, sollten vorteilhafterweise jeweils von separaten Armaturkörpern abgeschlossen sein, wobei die separaten Armaturkörper über ein Koppelelement untereinander stabilisiert sind. Damit ist ein Schwingen der einzelnen Ableitersäulen reduziert. Die Ableitersäulen stabilisieren sich über das Koppelelement gegenseitig. Damit ist eine Möglichkeit gegeben, ein begrenztes Bewegen des Ableitstrompfades relativ zu dem Kapselungsgehäuse zuzulassen, jedoch unzulässige Verwindungen zu vermeiden. Somit ist beispielsweise die Möglichkeit gegeben, am freien Ende der Ableitersäulen ein Kontaktierungselement, beispielsweise einen federelastischen Körper oder einen anderen reversibel verformbaren Körper, wie beispielsweise ein Kupferband, mit dem Koppelelement zu verbinden und dessen Potential durch das Kapselungsgehäuse nach außen zu übertragen. Die freien Enden der Ableitersäulen sollten vorzugsweise ein hochspannungsseitiges Ende einer Überspannungsableiteranordung darstellen. Damit ist die Möglichkeit gegeben, den im Innern des Kapselungsgehäuses befindlichen Ableitstrompfad außerhalb des Kapselungsgehäuses zur Einbindung der Überspannungsableiteranordnung in ein Elektroenergieübertragungsnetz zu kontaktieren. Es kann natürlich auch vorgesehen sein, dass die freien Enden der Ableitersäulen mit Erdpotential kontaktiert und die mit dem Kapselungsgehäuse verbundenen Enden mit Hochspannung beaufschlagt sind. Dies ist insbesondere bei Überspannungsableiteranordnungen für gasisolierte Anlagen vorteilhaft.

Im Bereich der Halterung und Befestigung der Ableitersäulen kann beispielsweise jede der Ableitersäulen ebenfalls einen separaten Armaturkörper aufweisen. Es kann jedoch auch vorgesehen sein, dass ein gemeinsamer Armaturkörper für mehrere Ableitersäulen zum Einsatz gelangt. Über diesen/diese Armaturkörper kann ebenfalls eine Kontaktierung des Ableitstrompfades durch eine Wandung des Kapselungsgehäuses hindurch erfolgen. Beispielsweise kann an dem Ende der Ableitersäulen, welches mit dem Kapselungsgehäuse zur Halterung verbunden ist, eine Kontaktierung mit Erdpotential erfolgen. Eine Halterung kann erdseitig oder hochspannungsseitig vorgesehen sein.

Im Folgenden wird ein Ausführungsbeispiel der Erfindung schematisch in einer Zeichnung gezeigt und nachfolgend näher beschrieben.

Dabei zeigt die
- Figur 1: einen Schnitt durch eine Überspannungsableiteranordnung mit Kapselungsgehäuse, die
- Figur 2: einen Armaturkörper, die
- Figur 3: ein Koppelelement, die
- Figur 4: eine Verbindung des aus der Figur 2 bekannten Armaturkörpers mit dem Koppelelement der Figur 3, und die
- Figur 5: eine Zusammenstellung mehrerer Ableitersäulen und Koppelung über ein gemeinsames Koppelelement, wie in der Konstruktion nach Figur 1 einsetzbar

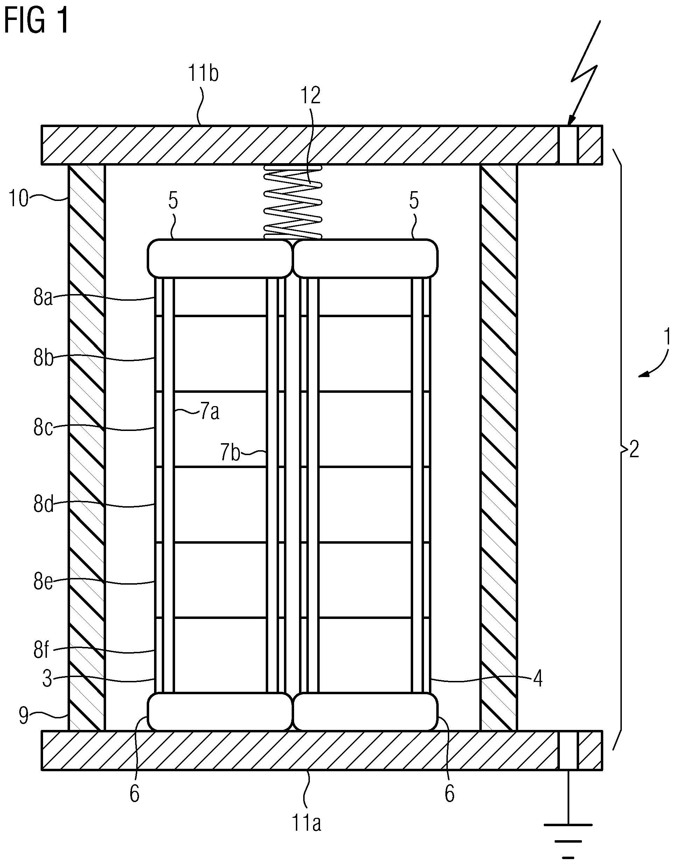

In der Figur 1 ist ein Schnitt durch eine Überspannungsableiteranordnung 1 gezeigt. Die Überspannungsableiteranordnung 1 weist einen Ableitstrompfad 2 auf. Der Ableitstrompfad 2 weist eine erste Ableitersäule 3 sowie eine zweite Ableitersäule 4 auf. Weitere Ableitersäulen sind durch die erste Ableitersäule 3 sowie die zweite Ableitersäule 4 verdeckt. Die erste Ableitersäule 3 sowie die zweite Ableitersäule 4 und die verdeckten Ableitersäulen weisen prinzipiell den gleichen Aufbau auf.

Anhand der ersten Ableitersäule 3 soll nunmehr beispielhaft der Aufbau einer Ableitersäule erläutert werden. Die erste Ableitersäule 3 weist jeweils endseitig die erste Ableitersäule 3 abschließende erste und zweite Armaturkörper 5, 6 auf. Die Armaturkörper 5, 6 der ersten Ableitersäule 3 sind über Zuganker 7a, 7b miteinander verbunden. Die Zuganker 7a, 7b sind in den Armaturkörpern 5, 6 festgelegt. Zwischen den Armaturkörpern 5, 6 sind mehrere Varistorelemente 8a, 8b, 8c, 8d, 8e, 8f eingelegt. Die Varistorelemente 8a, 8b, 8c, 8d, 8e, 8f sind jeweils zylinderförmig ausgestaltet, wobei diese stirnseitig aneinandergepresst sind. Die endseitig angeordneten Varistorelemente 8a, 8f liegen an den Armaturkörpern 5, 6 an. Über eine Verspannung der Zuganker 7a, 7b werden die Varistorelemente 8a, 8b, 8c, 8d, 8e, 8f zwischen den Armaturkörpern 5, 6 zusammengepresst, so dass ein winkelstarrer Verbund gebildet ist. Zur gleichmäßigen Verspannung der Armaturkörper 5, 6 sind weitere verdeckte Zuganker am Umfang der Varistorblöcke 8a, 8b, 8c, 8d, 8e, 8f angeordnet.

Die erste Ableitersäule 3 und die zweite Ableitersäule 4 sind von ihren Armaturkörpern 5, 6 jeweils endseitig begrenzt. Dabei weisen die jeweils am selben Ende der Ableitersäulen 3, 4 angeordneten ersten Armaturkörper 5 bzw. zweiten Armaturkörper 6 jeweils das gleiche elektrische Potential auf. Über die zweiten Armaturkörper 6 der Ableitersäulen 3, 4 sind die Ableitersäulen 3, 4 an einem Kapselungsgehäuse 9 der Überspannungsableiteranordnung fixiert. Das Kapselungsgehäuse 9 weist einen elektrisch isolierenden im Wesentlichen hohlzylindrischen Isolierkörper 10 auf, wobei der Isolierkörper 10 zur Bildung eines fluiddichten Kapselungsgehäuses 9 jeweils stirnseitig von einen ersten und einen zweiten Kontaktierungskörper 11a, 11b verschlossen ist. Die Kontaktierungskörper 11a, 11b verschließen das Innere des Isolierkörpers 10 fluiddicht, so dass das Kapselungsgehäuse 9 mit einem Isolierfluid befüllt werden kann, welches einen gegenüber der Umgebung erhöhten Druck aufweist.

An dem ersten Kontaktierungskörper 11a des Kapselungsgehäuses 9 sind die zweiten Armaturkörper 6 der Ableitersäulen 3, 4 befestigt und gehaltert. Der erste Kontaktierungskörper 11a dient der erdseitigen Kontaktierung des Ableitstrompfades 2. Über den ersten Kontaktierungskörper 11a sowie die dort befestigten zweiten Armaturkörper 6 sind die Ableitsäulen 3, 4 mit Erdpotential beaufschlagt. Das zum erdpotentialseitigen Ende entgegengesetzt liegende Ende der Ableitersäulen 3, 4 ragt frei in das Innere des Kapselungsgehäuses 9 hinein. Zur Kontaktierung eines hochspannungsseitigen Endes mit den ersten Armaturkörpern 5 der Ableitersäulen 3, 4 ist ein flexibles Kontaktelement 12 zwischen dem zweiten Kontaktierungskörper 11b und den am freien Ende der Ableitersäulen 3, 4 befindlichen ersten Armaturkörpern 5 angeordnet. An dem zweiten Kontaktierungselement 11b ist ein Hochspannungspotential, beispielsweise einer Freileitung, aufbringbar, so dass zwischen den Kontaktierungskörpern 11a, 11b ein Ableitstrompfad 2 über die Ableitersäulen 3, 4 ausgebildet ist. Das flexible Kontaktelement 12 ist beispielsweise eine Feder oder ein Kontaktband

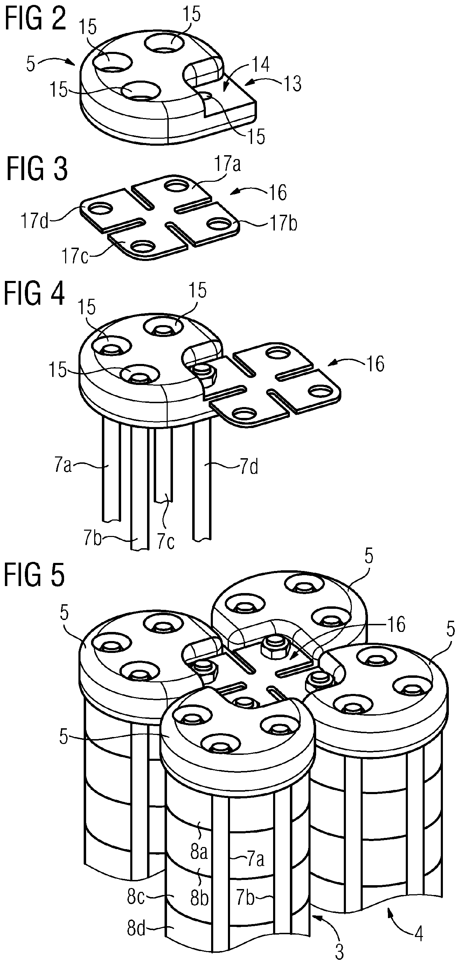

Die Figur 2 zeigt beispielhaft einen ersten Armaturkörper 5. Der erste Armaturkörper 5 weist eine im Wesentlichen kreiszylindrische Grundstruktur auf, wobei eine vorspringende Anformung 13 die Grundstruktur durchbricht. Der erste Armaturkörper 5 ist von mehreren Ausnehmungen 15 durchsetzt, wobei eine der Ausnehmungen 15 im Bereich der vorspringenden Anformung 13 positioniert ist. Um die Ausnehmung 15 im Bereich der vorspringenden Anformung 13 ist eine teilweise geschirmte Mulde 14 befindlich. Die Ausnehmung 15 in der vorspringenden Anformung wird teilweise von einer diese Ausnehmung 15 überragenden Schulter des Armaturkörpers 5 überragt.

Die Figur 3 zeigt ein Koppelelement 16. Das Koppelement 16 ist plattenförmig ausgestaltet. Das Koppelelement 16 weist eine im Wesentlichen rechteckige Kontur auf, wobei parallel zu den Außenkanten Schlitze in das Koppelelement 16 eingebracht sind. Dadurch sind ein erster Zweig 17a, ein zweiter Zweig 17b, ein dritter Zweig 17c sowie ein vierter Zweig 17d gebildet. In jedem der Zweige 17a, 17b, 17c, 17d ist eine zu den Ausnehmungen 15 des Armaturkörpers 5 korrespondierende Ausnehmung eingebracht.

Die Figur 4 zeigt eine Kombination des aus der Figur 2 bekannten ersten Armaturkörpers 5 und dem aus der Figur 3 bekannten Koppelelement 16. In die Ausnehmungen 15 des Armaturkörpers 5 sind Zuganker 7a, 7b, 7c, 7d eingebracht. Die Zuganker 17a, 17b, 17c, 17d weisen an ihren Enden Außengewinde auf, auf welche Muttern aufgeschraubt sind, so dass eine Zugkraft erzeugt werden kann. In der Ausnehmung 15, welche im Bereich der teilweise begrenzten Mulde 14 befindlich ist, ist ebenfalls ein Zuganker 7d mittels einer Mutter gesichert. Dabei ist der vierte Zweig 17d in die teilweise begrenzte Mulde 14 des Armaturkörpers 5 eingelegt, wobei die korrespondierende Ausnehmung im vierten Zweig 17d ebenfalls von demselben Zuganker 7d durchsetzt ist, wie die Ausnehmung 15 in der teilweise begrenzten Mulde 14, so dass eine Sicherung der Lage von Koppelelement 16 und Armaturkörper 6 über den Zuganker 7d und die zugehörige Mutter erfolgt.

Die Figur 5 zeigt eine Komplettierung der aus der Figur 4 bekannten Anordnung. Mehrere gleichartig aufgebaute Ableitersäulen 3, 4 sind mit gleichartigen Armaturkörpern 5 versehen, wobei diese derartig zueinander ausgerichtet sind, dass deren vorspringenden Anformungen auf einen zentralen Bereich hin ausgerichtet sind. Die die teilweise begrenzten Mulden 14 überragenden Körperkanten der ersten Armaturkörper 5 bilden eine von Körperkanten überragte und eingeschlossene Mulde, in welcher das Koppelelement 16 angeordnet ist. Das Koppelelement 16 ist mit jedem seiner vier Zweige 17a, 17b, 17c, 17d mit jeweils einem Zuganker, der sich in einer jeweiligen Ausnehmung 15 eines jeweiligen Armaturkörpers 5 in der Mulde befindet, festgelegt. Aus den teilweise begrenzten und von Körperkanten überragten Mulden 14 wird im Zusammenspiel der Armaturkörper 5 eine allseitig von Körperkanten begrenzte Mulde gebildet, welche einen feldfreien Raum zur Verfügung stellt.

Aufgrund der unterschiedlichen Höhen der einzelnen Varistorelemente 8a, 8b, 8c, 8d, 8e, 8f der einzelnen Ableitersäulen 3, 4 kann eine unabhängige Verformung der einzelnen Zweige 17a, 17b, 17c, 17d des Koppelelementes 16 nötig sein, so dass ein Verbund von Ableitersäulen 3, 4 gebildet werden kann, welcher mechanisch stabilisiert ist. Über das Koppelelement 16 ist beispielsweise das flexible Kontaktelement 12 mit den Ableitersäulen 3, 4 verbindbar, so dass sich der Ableitstrompfad 2 im Bereich der Ableitersäulen 3, 4 im vorliegenden Beispiel auf vier zueinander elektrisch parallel geschaltete Ableitersäulen aufteilt.

## Patentansprüche

1. Überspannungsableiteranordnung (1) mit einem mehrere Ableitersäulen (3, 4) aufweisenden Ableitstrompfad (2), wobei zumindest eine erste und eine zweite Ableitersäule (3, 4) jeweils zumindest einen eine Ableitersäule (3, 4) endseitig abschließenden Armaturkörper (5) aufweisen,
**dadurch gekennzeichnet, dass** die Armaturkörper (5) über ein Koppelelement (16) miteinander verbunden sind.

2. Überspannungsableiteranordnung (1) nach Anspruch 1,
**dadurch gekennzeichnet, dass** das Koppelelement (16) unabhängig voneinander verformbare Zweige (17a, 17b, 17c, 17d) aufweist und die Armaturkörper (5) mit verschiedenen Zweigen (17a, 17b, 17c, 17d) verbunden sind.

3. Überspannungsableiteranordnung (1) nach Anspruch 1 oder 2,
**dadurch gekennzeichnet, dass** die Zweige (17a, 17b, 17c, 17d) durch zumindest einen Schlitz in einer Platte gebildet sind.

4. Überspannungsableiteranordnung (1) nach einem der Ansprüche 1 bis 3,
**dadurch gekennzeichnet, dass** die miteinander verbundenen Armaturkörper (5) Schultern aufweisen, welche das Koppelelement (16) schirmen.

5. Überspannungsableiteranordnung (1) nach einem der Ansprüche 1 bis 4,
**dadurch gekennzeichnet, dass** zur Verspannung zumindest einer der Ableitersäulen (3, 4) zumindest ein Zuganker (7a, 7b, 7c, 7d) gemeinsam mit dem Koppelelement (16) an einem Armaturkörper (5) angeschlagen ist.

6. Überspannungsableiteranordnung (1) nach einem der Ansprüche 1 bis 5,
**dadurch gekennzeichnet, dass** über das Koppelelement (16) die Ableitersäulen (3, 4) elektrisch kontaktiert sind.

7. Überspannungsableiteranordnung (1) nach einem der Ansprüche 1 bis 6,
**dadurch gekennzeichnet, dass** die Ableitersäulen (3, 4) innerhalb eines Kapselungsgehäuses (9) angeordnet und an ihren von dem Koppelelement (16) abgewandten Enden gehaltert sind.

## Claims

1. Surge arrester arrangement (1) comprising a discharge current path (2) which has a plurality of arrester columns (3, 4), wherein at least a first and a second arrester column (3, 4) each have at least one armature body (5) which closes off an arrester column (3, 4) at the end,
**characterized in that**
the armature bodies (5) are connected to one another by means of a coupling element (16).

2. Surge arrester arrangement (1) according to Claim 1,
**characterized in that**
the coupling element (16) has branches (17a, 17b, 17c, 17d) which can be deformed independently of one another, and the armature bodies (5) are connected to different branches (17a, 17b, 17c, 17d).

3. Surge arrester arrangement (1) according to Claim 1 or 2,
**characterized in that**
the branches (17a, 17b, 17c, 17d) are formed by at least one slot in a plate.

4. Surge arrester arrangement (1) according to one of Claims 1 to 3,
**characterized in that**
the armature bodies (5), which are connected to one another, have shoulders which shield the coupling element (16).

5. Surge arrester arrangement (1) according to one of Claims 1 to 4,
**characterized in that**
at least one tie rod (7a, 7b, 7c, 7d), together with the coupling element (16), is fitted to an armature body (5) for the purpose of bracing at least one of the arrester columns (3, 4).

6. Surge arrester arrangement (1) according to one of Claims 1 to 5,
**characterized in that**
the arrester columns (3, 4) are electrically contact-connected by means of the coupling element (16).

7. Surge arrester arrangement (1) according to one of Claims 1 to 6,
**characterized in that**
the arrester columns (3, 4) are arranged within an encapsulation housing (9) and are mounted at their ends which are averted from the coupling element (16).

## Revendications

1. Dispositif (1) de protection vis-à-vis d'une surtension, comprenant un trajet (2) de courant de déviation, comportant plusieurs colonnes (3, 4) de protection vis-à-vis d'une surtension, au moins une première et une deuxième colonnes (3, 4) de protection vis-à-vis d'une surtension ayant chacune au moins une pièce (5) d'armature fermant une colonne (3, 4) de protection vis-à-vis d'une surtension du côté de l'extrémité,
**caractérisé en ce que**
les pièces (5) d'armature sont reliées entre elles par un élément (16) de couplage.

2. Dispositif (1) de protection vis-à-vis d'une surtension suivant la revendication 1,
**caractérisé en ce que**
l'élément (16) de couplage a des branches (17a, 17b, 17c, 17d) déformables indépendamment les unes des autres et les pièces (5) d'armature sont reliées à des branches (17a, 17b, 17c, 17d) différentes.

3. Dispositif (1) de protection vis-à-vis d'une surtension suivant la revendication 1 ou 2,
**caractérisé en ce que**
les branches (17a, 17b, 17c, 17d) sont formées par au moins une fente dans une plaque.

4. Dispositif (1) de protection vis-à-vis d'une surtension suivant l'une des revendications 1 à 3,
**caractérisé en ce que**
les pièces (5) d'armature reliées entre elles ont des épaulements, qui protègent l'élément (16) de couplage.

5. Dispositif (1) de protection vis-à-vis d'une surtension suivant l'une des revendications 1 à 4,
**caractérisé en ce que**,
pour le blocage d'au moins l'une des colonnes (3, 4) de protection vis-à-vis d'une surtension, au moins un tirant (7a, 7b, 7c, 7d) est calé conjointement avec l'élément (16) de couplage sur une pièce (5) d'armature.

6. Dispositif (1) de protection vis-à-vis d'une surtension suivant l'une des revendications 1 à 5,
**caractérisé en ce que**,
les colonnes (3, 4) de protection vis-à-vis d'une surtension sont mises en contact électriquement par l'élément (16) de couplage.

7. Dispositif (1) de protection vis-à-vis d'une surtension suivant l'une des revendications 1 à 6,
**caractérisé en ce que**,
les colonnes (3, 4) de protection vis-à-vis d'une surtension sont disposées à l'intérieur d'un boîtier de blindage et sont maintenues, à leur extrémité, éloignées de l'élément (16) de couplage.
